# EUROPÄISCHE PATENTANMELDUNG

(11) **EP 4 618 365 A1**
(43) Veröffentlichungstag der Anmeldung: **17.09.2025**
(21) Anmeldenummer: 25158797.8
(22) Anmeldetag: 19.02.2025
(51) Int. Cl.: H02J 7/00, B60L 58/19, B60L 58/21

(54) **ENERGIESPEICHERVORRICHTUNG MIT ENERGIESPEICHERÜBERGREIFEND VERBINDBAREN ZELLMODULEN**

(30) Priorität: 29.02.2024 DE 102024105826
(71) Anmelder: MAN Truck & Bus SE, 80995 München (DE)
(72) Erfinder: Störmer, Nils, 80995 München (DE); Engelhardt, Alexander, 80995 München (DE)

(57) **Zusammenfassung**

Die Erfindung betrifft eine Energiespeichervorrichtung (10) für ein Kraftfahrzeug. Die Energiespeichervorrichtung (10) weist einen ersten elektrischen Energiespeicher (12.1), aufweisend mehrere erste Zellmodule (14.1), die jeweils mehrere in Serie verschalteter erster Speicherzellen (16.1) aufweisen, und einen zweiten elektrischen Energiespeicher (12.2), aufweisend mehrere zweite Zellmodule (14.2), die jeweils mehrere in Serie verschalteter zweiter Speicherzellen (16.2) aufweisen, auf. Die Energiespeichervorrichtung (10) weist ferner ein schaltbares Verbindungssystem (18), mittels dessen die ersten und zweiten Zellmodule (14.1, 14.2) miteinander elektrisch verbindbar sind. Das Verbindungssystem (18) weist mehrere Schaltzustände auf, aufweisend: einen Teil-Teil-Schaltzustand, in dem lediglich ein Teil der ersten Zellmodule (14.1) und lediglich ein Teil der zweiten Zellmodule (14.2) miteinander elektrisch verbunden sind; und/oder einen Teil-Alle-Schaltzustand, in dem lediglich ein Teil der ersten Zellmodule (14.1) und alle zweiten Zellmodule (14.2) miteinander elektrisch verbunden sind. Ferner weist die Energiespeichervorrichtung (10) eine Verarbeitungseinrichtung (19) auf, die konfiguriert ist, das Verbindungssystem (18) in einen der mehreren Schaltzustände zu versetzen.

## Beschreibung

Die Erfindung betrifft eine Energiespeichervorrichtung sowie ein Kraftfahrzeug mit einer solchen Energiespeichervorrichtung.

Elektrische Energiespeicher für Kraftfahrzeuge sind im Stand der Technik grundsätzlich bekannt. Derartige Energiespeicher bestehen in der Regel aus einer Vielzahl von elektrisch miteinander verschalteten Batteriezellen, die zu Batteriemodulen (vor-)gruppiert sein können.

Während im PKW-Bereich häufig ein einziger Energiespeicher ausreicht, um das Fahrzeug mit Energie zu versorgen, sind bei Nutzfahrzeugen, wie z. B. bei LKWs, Sattelzugmaschinen oder Bussen, hierfür in der Regel mehrere solcher Energiespeicher erforderlich.

Dabei ist es durch entsprechende Schaltelemente bzw. Schaltschütze bei den bekannten Energiespeichern mitunter auch möglich, einzelne oder mehrere der Energiespeicher komplett vom Bordnetz zu trennen. Diese Art der Schaltbarkeit erlaubt jedoch nur eine sehr eingeschränkte Flexibilität bei der Verbindung der Energiespeicher.

Darüber hinaus führen die zukünftig geplanten Ladeleistungen (MCS-Standard bis zu 3 Megawatt) mit steigenden Stromstärken zu hohen Wärmeverlusten im Hochvoltsystem des Fahrzeugs und den darin befindlichen Komponenten. Um diese Wärmeverluste abzuführen und das System vor thermischer Überlastung zu schützen, könnten größere Leitungsquerschnitte verwendet oder aktive Flüssigkeitskühlsysteme integriert werden. Diese haben jedoch den Nachteil, dass sie das Gewicht bzw. den Montageaufwand erhöhen.

Aufgabe der Erfindung ist es, einen verbesserten Energiespeicher bereitzustellen, mittels dessen die Nachteile bisheriger Lösungen vorzugsweise vermieden werden. Bevorzugt ist es Aufgabe der Erfindung einen Energiespeicher bereitzustellen, der ein möglichst flexibles Anpassen dessen Spannungsniveau je nach Betriebs- bzw. Fahrzustand ermöglicht, beispielsweise um dadurch ein möglichst hohes Spannungsniveau für ein Laden des Energiespeichers bereitzustellen, was eine Reduzierung der benötigten Stromstärke und der damit verbundenen thermischen Verluste bei gleicher elektrischer Leistung ermöglicht.

Diese Aufgaben können mit den Merkmalen der unabhängigen Ansprüche gelöst werden. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem ersten unabhängigen Aspekt der vorliegenden Offenbarung wird eine Energiespeichervorrichtung für ein Kraftfahrzeug (z. B. für ein Nutzfahrzeug) bereitgestellt. Beispielsweise kann die Energiespeichervorrichtung in ein Kraftfahrzeug integrierbar und/oder einbaubar sein.

Die Energiespeichervorrichtung weist einen ersten elektrischen (z. B. Hochvolt-)Energiespeicher (z. B. ein erstes Batteriepaket) auf. Der erste elektrische Energiespeicher weist seinerseits mehrere erste Zellmodule auf, die jeweils mehrere in Serie verschaltete erste Speicherzellen (z. B. Lithium-Ionen-Speicherzellen) aufweisen.

Die Energiespeichervorrichtung weist ferner einen zweiten elektrischen (z. B. Hochvolt-)Energiespeicher (z. B. ein zweites Batteriepaket) auf. Der zweite elektrische Energiespeicher weist seinerseits mehrere zweite Zellmodule auf, die jeweils mehrere in Serie verschaltete zweite Speicherzellen (z. B. Lithium-Ionen-Speicherzellen) aufweisen.

Bevorzugt sind dabei der erste elektrische Energiespeicher und der zweite elektrische Energiespeicher als separate und/oder voneinander beabstandete und/oder jeweils von einem jeweiligen Energiespeichergehäuse umgebene Komponenten ausgebildet.

Die Energiespeichervorrichtung weist ferner ein (z. B. schaltbares) Verbindungssystem auf, mittels dessen die ersten Zellmodule und die zweiten Zellmodule (z. B. energiespeicherübergreifen) miteinander elektrisch verbindbar (z. B. verschaltbar) sind. Das Verbindungssystem weist dabei mehrere Schaltzustände auf, die im Folgenden noch näher beschrieben werden.

Die Energiespeichervorrichtung weist ferner eine Verarbeitungseinrichtung (z. B. eine Steuereinrichtung) auf, die konfiguriert ist, das Verbindungssystem (z. B. wahlweise) in einen der mehreren Schaltzustände zu versetzen. Bevorzugt ist das Verbindungssystem somit mittels der Verarbeitungseinrichtung wahlweise in jeden der mehreren Schaltzustände versetzbar.

Die vorgenannten mehreren Schaltzustände können einen Teil-Teil-Schaltzustand aufweisen, in dem lediglich ein Teil (z. B. eine Teilmenge) der ersten Zellmodule (z. B. ein Drittel der ersten Zellmodule) und lediglich ein Teil (z. B. eine Teilmenge) der zweiten Zellmodule (z. B. eine Hälfte der zweiten Zellmodule) miteinander (z. B. in Serie oder parallel oder in einer kombinierten Reihen-Parallel-Schaltung) elektrisch verbunden sind. Bevorzugt sind in dem Teil-Teil-Schaltzustand somit nicht alle der ersten und zweiten Zellmodule miteinander elektrisch verbunden.

Zudem oder alternativ können die mehreren Schaltzustände auch einen Teil-Alle-Schaltzustand aufweisen, in dem lediglich ein Teil (z. B. eine Teilmenge) der ersten Zellmodule (z. B. ein Drittel der ersten Zellmodule) und alle zweiten Zellmodule miteinander elektrisch (z. B. in Serie oder parallel oder in einer kombinierten Reihen-Parallel-Schaltung) verbunden sind.

Auf vorteilhafte Weise kann so eine energiespeicherübergreifende Verschaltung der Energiespeicher bzw. deren Zellmodule ermöglicht werden. Im Gegensatz zu bestehenden Systemen ist die beschriebene Energiespeichervorrichtung jedoch nicht auf ein reines Zu- oder Abschalten einzelner bzw. kompletter Energiespeicher beschränkt. Vielmehr ermöglicht die beschriebene Verschaltbarkeit der Energiespeichervorrichtung auf der Zellebene in vorteilhafter Weise eine flexible bzw. bedarfsgerechte Bereitstellung einer für den jeweiligen Betriebszustand möglichst geeigneten bzw. optimalen Energiespeicherarchitektur mit entsprechendem Spannungsniveau.

Hierbei versteht sich, dass im Teil-Teil-Schaltzustand der Teil der ersten Zellmodule und der Teil der zweiten Zellmodule weiterhin auch mit mindestens einem weiteren Zellmodul mindestens eines weiteren Energiespeichers der Energiespeichervorrichtung (z. B. in Serie oder parallel oder in einer kombinierten Reihen-Parallel-Schaltung) elektrisch verbunden sein können. Weiterhin können auch im Teil-Alle-Schaltzustand der Teil der ersten Zellmodule und alle zweiten Zellmodule zusätzlich auch mit mindestens einem (bzw. dem) weiteren Zellmodul mindestens eines (bzw. des mindestens einen) weiteren Energiespeichers der Energiespeichervorrichtung (z. B. in Serie oder parallel oder in einer kombinierten Reihen-Parallel-Schaltung) elektrisch verbunden sein.

Gemäß einem ersten Aspekt kann der Teil der ersten Zellmodule in dem Teil-Teil-Schaltzustand lediglich eine Hälfte, vorzugsweise lediglich ein Drittel, besonders bevorzugt lediglich ein Viertel, der ersten Zellmodule oder lediglich ein einziges der ersten Zellmodule aufweisen. Auf vorteilhafte Weise ist es dadurch möglich, bei Bedarf auch nur eine geringe Spannungslage der Energiespeichervorrichtung bereitzustellen.

Zudem oder alternativ kann der Teil der zweiten Zellmodule in dem Teil-Teil-Schaltzustand lediglich eine Hälfte, vorzugsweise lediglich ein Drittel, besonders bevorzugt lediglich ein Viertel, der zweiten Zellmodule oder lediglich ein einziges der zweiten Zellmodule aufweisen. Auch dies ermöglicht wiederum auf vorteilhafte Weise, bei Bedarf lediglich eine geringe Spannungslage bereitzustellen.

Nach einem weiteren Aspekt kann der Teil der ersten Zellmodule in dem Teil-Alle-Schaltzustand lediglich eine Hälfte, vorzugsweise lediglich ein Drittel, besonders bevorzugt lediglich ein Viertel, der ersten Zellmodule oder lediglich ein einziges der ersten Zellmodule aufweisen.

Gemäß einem weiteren Aspekt kann das Verbindungssystem mehrere (z. B. schaltbare) Leitungsabschnitte und/oder mehrere (z. B. Hochvolt-)Schaltelemente (z. B. Halbleiterschaltelemente) aufweisen. Die mehreren Schaltelemente können beispielsweise wenigstens einen Bipolartransistor mit isolierter Gate-Elektrode (IGBT) und/oder wenigstens einen Metalloxid-Halbleiter-Feldeffekttransistor (MOSFET) und/oder wenigstens einen Sperrschicht-Feldeffekttransistor (JFET) aufweisen. Dadurch kann auf vorteilhafte Weise eine möglichst platzsparende Möglichkeit zur Verschaltung des Verbindungssystems bereitgestellt werden.

Nach einem weiteren Aspekt kann das Verbindungssystem, vorzugsweise die mehreren Leitungsabschnitte, mindestens einen (z. B. schaltbaren) ersten Leitungsabschnitt aufweisen, über den zwei (z. B. verschiedene) der ersten Zellmodule in Serie miteinander verbunden sind. Weiterhin kann das Verbindungssystem, vorzugsweise die mehreren Schaltelemente, mindestens ein erstes Schaltelement aufweisen, das in dem mindestens einen ersten Leitungsabschnitt angeordnet ist.

Bevorzugt weist das Verbindungssystem, vorzugsweise die mehreren Leitungsabschnitte, jedoch mehrere (z. B. schaltbare) erste Leitungsabschnitte auf, über die jeweils zwei (z. B. verschiedene) der ersten Zellmodule (z. B. paarweise) in Serie miteinander verbunden sind. Weiterhin bevorzugt weist das Verbindungssystem, vorzugsweise die mehreren Schaltelemente, mehrere erste Schaltelemente auf, wobei jeweils eines der mehreren ersten Schaltelemente in jeweils einem der mehreren ersten Leitungsabschnitte angeordnet ist. Auf vorteilhafte Weise kann dadurch ein möglichst flexibles bzw. bedarfsgerechtes Verschalten der ersten Zellmodule gewährleistet werden.

Gemäß einem weiteren Aspekt kann das Verbindungssystem, vorzugsweise die mehreren Leitungsabschnitte, mindestens einen (z. B. schaltbaren) zweiten Leitungsabschnitt aufweisen, über den zwei (z. B. verschiedene) der zweiten Zellmodule in Serie miteinander verbunden sind. Weiterhin kann das Verbindungssystem, vorzugsweise die mehreren Schaltelemente, mindestens ein zweites Schaltelement aufweisen, das in dem mindestens einen zweiten Leitungsabschnitt angeordnet ist.

Bevorzugt weist das Verbindungssystem, vorzugsweise die mehreren Leitungsabschnitte, jedoch mehrere (z. B. schaltbare) zweite Leitungsabschnitte auf, über die jeweils zwei (z. B. verschiedene) der zweiten Zellmodule (z. B. paarweise) in Serie miteinander verbunden sind. Weiterhin bevorzugt weist das Verbindungssystem, vorzugsweise die mehreren Schaltelemente, mehrere zweite Schaltelemente auf, wobei jeweils eines der mehreren zweiten Schaltelemente in jeweils einem der mehreren zweiten Leitungsabschnitte angeordnet ist. Auf vorteilhafte Weise kann auch dadurch ein möglichst flexibles bzw. bedarfsgerechtes Verschalten der zweiten Zellmodule gewährleistet werden.

Nach einem weiteren Aspekt kann das Verbindungssystem, vorzugsweise die mehreren Leitungsabschnitte, mindestens einen (z. B. schaltbaren) Kopplungsleitungsabschnitt aufweisen, über den eines der ersten Zellmodule und eines der zweiten Zellmodule in Serie miteinander verbunden sind. Weiterhin kann das Verbindungssystem, vorzugsweise die mehreren Schaltelemente, mindestens ein Kopplungsschaltelement aufweisen, das in dem mindestens einen Kopplungsleitungsabschnitt angeordnet ist.

Bevorzugt weist das Verbindungssystem, vorzugsweise die mehreren Leitungsabschnitte, jedoch mehrere (z. B. schaltbare) Kopplungsleitungsabschnitte auf, über die jeweils eines der ersten Zellmodule und jeweils eines der zweiten Zellmodule (z. B. paarweise) in Serie miteinander verbunden sind. Weiterhin bevorzugt weist das Verbindungssystem, vorzugsweise die mehreren Schaltelemente, mehrere Kopplungsschaltelemente auf, wobei jeweils eines der mehreren Kopplungsschaltelemente in jeweils einem der mehreren Kopplungsleitungsabschnitte angeordnet ist. Auf vorteilhafte Weise kann dadurch ein möglichst flexibles bzw. bedarfsgerechtes energiespeicherübergreifendes Verschalten der Zellmodule gewährleistet werden.

Nach einem weiteren Aspekt kann der erste elektrische Energiespeicher eine Schaltbox (z. B. eine battery junction box) aufweisen, in der ein Teil der mehreren Schaltelemente aufgenommen (z. B. untergebracht) ist. Zur besseren Unterscheidung kann diese Schaltbox bspw. auch als erste Schaltbox bezeichnet werden.

Weiterhin kann auch der zweite elektrische Energiespeicher eine Schaltbox (z. B. eine battery junction box) aufweisen, in der ein anderer Teil der mehreren Schaltelemente aufgenommen (z. B. untergebracht) ist. Diese kann zur besseren Unterscheidung bspw. auch als zweite Schaltbox bezeichnet werden.

Bevorzugt sind die erste Schaltbox und die zweite Schaltbox räumlich voneinander getrennt (z. B. beabstandet voneinander) angeordnet. Beispielsweise kann die erste Schaltbox innerhalb eines ersten Energiespeichergehäuses des ersten Energiespeichers und die zweite Schaltbox innerhalb eines zweiten Energiespeichergehäuses des zweiten Energiespeichers angeordnet sein. Dadurch kann auf vorteilhafte Weise eine gute Zugänglichkeit der Schaltelemente, z. B. für Wartungs- oder Reparaturarbeiten, gewährleistet werden.

Gemäß einem weiteren Aspekt können die mehreren Schaltzustände ferner auch einen Serienschaltzustand aufweisen, in welchem alle ersten Zellmodule und alle zweiten Zellmodule miteinander (z. B. ausschließlich) in Serie verbunden sind. Dadurch kann vorteilhafterweise im Bedarfsfall ein möglichst hohes Spannungsniveau bereitgestellt werden, beispielsweise für Leistungsspitzen und/oder ein Laden mit möglichst geringen Wärmeverlusten.

Nach einem weiteren Aspekt können die mehreren Schaltzustände ferner auch einen Parallelschaltzustand aufweisen, in welchem alle ersten Zellmodule miteinander in Serie verbunden sind, alle zweiten Zellmodule miteinander in Serie verbunden sind und alle (z. B. in Serie verbundenen) ersten Zellmodule und alle (z. B. in Serie verbundenen) zweiten Zellmodule zueinander parallel verbunden sind. Auf vorteilhafte Weise kann dadurch im Bedarfsfall ein Reduzieren des Innenwiderstands ermöglicht werden.

Gemäß einem weiteren Aspekt können die mehreren Schaltzustände auch einen Teillastschaltzustand aufweisen, in welchem ausschließlich ein Teil der ersten Zellmodule (z. B. in einer auf Zellmodule des ersten Energiespeichers beschränkten Reihenschaltung) miteinander in Serie verbunden ist oder ausschließlich ein Teil der zweiten Zellmodule (z. B. in einer auf Zellmodule des zweiten Energiespeichers beschränkten Reihenschaltung) miteinander in Serie verbunden ist. Auf vorteilhafte Weise können dadurch im Bedarfsfall gezielt nur wenige der ersten bzw. zweiten Zellmodule verschaltet sein.

Nach einem weiteren Aspekt können die mehreren Schaltzustände auch einen Balancingschaltzustand aufweisen, in welchem zumindest zwei der ersten Zellmodule innerhalb des ersten Energiespeichers in einem geschlossenen Stromkreis verbunden sind und/oder zumindest zwei der zweiten Zellmodule innerhalb des zweiten Energiespeichers in einem geschlossenen Stromkreis verbunden sind. Zudem oder alternativ ist es auch möglich, dass im Balancingschaltzustand zumindest eines der ersten Zellmodule und zumindest eines der zweiten Zellmodule in einem (z. B. energiespeicherübergreifenden) geschlossenen Stromkreis ohne zusätzlichen Verbraucher verbunden sind. Auf vorteilhafte Weise können dadurch Ladungsunterschiede zwischen den Zellmodulen ausgeglichen werden.

Gemäß einem weiteren Aspekt können die mehreren Schaltzustände auch einen weiteren Teil-Teil-Schaltzustand aufweisen, in welchem lediglich ein Teil der ersten Zellmodule und lediglich ein Teil der zweiten Zellmodule miteinander (z. B. parallel oder in Serie oder in einer kombinierten Reihen-Parallel-Schaltung) elektrisch verbunden sind. Bevorzugt weist der weitere Teil-Teil-Schaltzustand dabei dieselben (ersten und zweiten) Zellmodule wie der Teil-Teil-Schaltzustand auf, allerdings sind diese vorzugsweise unterschiedlich verbunden. Beispielsweise können für den Fall, dass im Teil-Teil-Schaltzustand der Teil der ersten Zellmodule und der Teil der zweiten Zellmodule miteinander in Serie verbunden sind, der Teil der ersten Zellmodule und der Teil der zweiten Zellmodule im weiteren Teil-Teil-Schaltzustand miteinander parallel verbunden sein, und umgekehrt. Auf vorteilhafte Weise kann dadurch eine möglichst flexible Veschaltbarkeit der Energiespeichervorrichtung ermöglicht werden.

Nach einem weiteren Aspekt können die mehreren Schaltzustände auch einen weiteren Teil-Alle-Schaltzustand aufweisen, in welchem lediglich ein Teil der ersten Zellmodule und alle zweiten Zellmodule miteinander (z. B. parallel oder in Serie oder in einer kombinierten Reihen-Parallel-Schaltung) elektrisch verbunden sind. Bevorzugt weist der weitere Teil-Alle-Schaltzustand dieselben (ersten und zweiten) Zellmodule wie der Teil-Alle-Schaltzustand auf, allerdings sind diese vorzugsweise unterschiedlich verbunden. Beispielsweise können für den Fall, dass im Teil-Alle-Schaltzustand der Teil der ersten Zellmodule und alle zweiten Zellmodule miteinander in Serie verbunden sind, der Teil der ersten Zellmodule und alle zweiten Zellmodule im weiteren Teil-Alle-Schaltzustand miteinander parallel verbunden sein, und umgekehrt. Auf vorteilhafte Weise kann auch dadurch wiederum eine möglichst flexible Veschaltbarkeit der Energiespeichervorrichtung ermöglicht werden.

In diesem Zusammenhang ist weiterhin zu erwähnen, dass es im Serienschaltzustand, im Parallelschaltzustand, im Balancingschaltzustand, im weiteren Teil-Teil-Schaltzustand und/oder im weiteren Teil-Alle-Schaltzustand wiederum möglich, dass ausschließlich die jeweiligen Komponenten bzw. Zellmodule verbunden sind. Beispielsweise können im Serienschaltzustand ausschließlich alle ersten Zellmodule und alle zweiten Zellmodule miteinander in Serie verbunden sein. Für jeden der Schaltzustände ist es allerdings auch möglich, dass die jeweiligen Zellmodule (z. B. die alle ersten und zweiten Zellmodule im Serienschaltzustand) zusätzlich mit mindestens einem (bzw. dem mindestens einen) weiteren Zellmodul mindestens eines (bzw. des mindestens einen) weiteren Energiespeichers der Energiespeichervorrichtung (z. B. in Serie oder parallel) elektrisch verbunden sind.

Gemäß einem weiteren Aspekt kann die Verarbeitungseinrichtung konfiguriert sein, in Abhängigkeit mindestens einer (z. B. aktuellen und/oder sensorisch erfassten) Zustandsgröße der Energiespeichervorrichtung (z. B. einer jeweiligen Spannung und/oder Temperatur der ersten und/oder zweiten Zellmodule) und/oder in Abhängigkeit mindestens eines (z. B. empfangenen) Zielkriteriums einen Soll-Schaltzustand aus den mehreren Schaltzuständen auszuwählen und das Verbindungssystem in den ausgewählten Soll-Schaltzustand zu versetzen. Lediglich beispielhaft kann die Verarbeitungseinrichtung konfiguriert sein, aus den mehreren Schaltzuständen denjenigen Schaltzustand als Soll-Schaltzustand auszuwählen, welcher von allen Schaltzuständen das maximale Spannungsniveau aufweist. Dies ermöglicht auf vorteilhafte Weise eine möglichst bedarfsgerechte Energiespeicherarchitektur bereitzustellen.

Nach einem weiteren Aspekt kann das mindestens eine Zielkriterium mindestens eines der folgenden Kriterien aufweisen: ein (z. B. maximales oder vorgegebenes) Spannungsniveau, einen (z. B. minimalen) Innenwiderstand, einen (z. B. möglichst gleichmäßigen) Alterungszustand der ersten und zweiten Zellmodule, einen (z. B. maximalen) Gesamtwirkungsgrad und eine (z. B. vorgegebenes) Leistung.

Weiterhin kann die Verarbeitungseinrichtung konfiguriert sein, als Soll-Schaltzustand denjenigen aus den mehreren Schaltzuständen auszuwählen, welcher das mindestens eine Zielkriterium (z. B. unter Berücksichtigung der mindestens einen Zustandsgröße) bestmöglich erfüllt. Bevorzugt ist die Verarbeitungseinrichtung somit konfiguriert, eine Optimierung des Schaltzustands der Verarbeitungseinrichtung hinsichtlich mindestens eines Zielkriteriums vorzunehmen. Lediglich beispielhaft kann die Optimierung mittels einer dem Fachmann bekannter Optimierungsmethode, darunter z. B. dynamische Programmierung, Heuristik, gradientenbasiertes Newtonverfahren und/oder genetische Optimierung, erfolgen. Weiterhin kann das mindestens eine Zielkriterium bspw. auch mehrere Zielkriterien aufweisen (multikriterielle Optimierung). Auf vorteilhafte Weise kann dadurch möglichst flexibel bzw. bedarfsgerecht eine für den jeweiligen Betriebszustand möglichst geeignete bzw. optimale Energiespeicherarchitektur bereitgestellt werden.

Gemäß einem weiteren Aspekt kann die mindestens eine Zustandsgröße eine Größe aufweisen, die einen fehlerhaften Betriebszustand in zumindest einem der ersten Zellmodule und/oder in zumindest einem der zweiten Zellmodule anzeigt. Beispielsweise kann die Größe ein Fehlerzustandssignal sein. Weiterhin kann die Verarbeitungseinrichtung konfiguriert sein, als Soll-Schaltzustand einen Schaltzustand aus den mehreren Schaltzuständen auszuwählen, welcher das zumindest eine erste und/oder zweite Zellmodul mit fehlerhaftem Betriebszustand nicht aufweist. Auf vorteilhafte Weise können dadurch fehlerhafte bzw. ausgefallene Zellmodule gezielt aus der Verschaltung entfernt werden bzw. durch entsprechendes Anpassen der Verschaltung kompensiert werden. Die Größe bzw. das Fehlerzustandssignal kann hierbei bspw. eine (z. B. weitere) Randbedingung bei der Optimierung des Schaltzustands der Verarbeitungseinrichtung sein bzw. vorgeben.

Nach einem weiteren Aspekt können in dem Teil-Teil-Schaltzustand die (ersten) Zellmodule des Teils der ersten Zellmodule zumindest teilweise in einer kombinierten Reihen-Parallel-Schaltung miteinander elektrisch verbunden sein. Beispielsweise können zwei erste Zellmodule des Teils der ersten Zellmodule zueinander parallel verschaltet und diese Parallelschaltung in Serie mit einem weiteren ersten Zellmodul des Teils der ersten Zellmodule verbunden sein. Zudem oder alternativ können in dem Teil-Teil-Schaltzustand auch die (zweiten) Zellmodule des Teils der zweiten Zellmodule zumindest teilweise in einer kombinierten Reihen-Parallel-Schaltung miteinander elektrisch verbunden sein. Beispielsweise können zwei zweite Zellmodule des Teils der zweiten Zellmodule zueinander parallel verschaltet und diese Parallelschaltung in Serie mit einem weiteren zweiten Zellmodul des Teils der zweiten Zellmodule verbunden sein. Zudem oder alternativ können in dem Teil-Teil-Schaltzustand auch die (ersten) Zellmodule des Teils der ersten Zellmodule und die (zweiten) Zellmodule des Teils der zweiten Zellmodule zumindest teilweise in einer kombinierten Reihen-Parallel-Schaltung miteinander elektrisch verbunden sein. Bevorzugt ist dabei zumindest eines der (ersten) Zellmodule des Teils der ersten Zellmodule und zumindest eines der (zweiten) Zellmodule des Teils der zweiten Zellmodule in Serie miteinander verbunden. Auf vorteilhafte Weise kann dadurch eine Absenkung des Innenwiderstands im Vergleich zu einer reinen Reihenschaltung realisiert werden.

Gemäß einem weiteren Aspekt können in dem Teil-Alle-Schaltzustand die (ersten) Zellmodule des Teils der ersten Zellmodule zumindest teilweise in einer kombinierten Reihen-Parallel-Schaltung miteinander elektrisch verbunden sein. Zudem oder alternativ können in dem Teil-Alle-Schaltzustand auch die zweiten Zellmodule (bzw. die (zweiten) Zellmodule aller zweiten Zellmodule) zumindest teilweise in einer kombinierten Reihen-Parallel-Schaltung miteinander elektrisch verbunden sein. Zudem oder alternativ können in dem Teil-Alle-Schaltzustand auch die (ersten) Zellmodule des Teils der ersten Zellmodule und die zweiten Zellmodule (bzw. die (zweiten) Zellmodule aller zweiten Zellmodule) zumindest teilweise in einer kombinierten Reihen-Parallel-Schaltung miteinander elektrisch verbunden sein. Bevorzugt ist dabei zumindest eines der (ersten) Zellmodule des Teils der ersten Zellmodule und zumindest eines der (zweiten) Zellmodule der bzw. aller zweiten Zellmodule in Serie miteinander verbunden. Auch dies ermöglicht wiederum vorteilhafte Weise eine Absenkung des Innenwiderstands im Vergleich zu einer reinen Reihenschaltung.

Nach einem weiteren Aspekt können die mehreren Schaltzustände einen Innenwiderstandsreduktionsschaltzustand aufweisen, in welchem die ersten Zellmodule und/oder die zweiten Zellmodule zumindest teilweise in einer (z. B. energiespeicherübergreifenden) kombinierten Reihen-Parallel-Schaltung miteinander elektrisch verbunden sind. Lediglich beispielhaft können hierbei zunächst für ein bestimmtes Spannungsniveau die ersten und/oder zweiten Zellmodule in Serie miteinander verbunden werden und anschließend möglichst viele der verbleibenden Zellmodule jeweils parallel zu einzelnen oder mehreren der in Serie verbundenen Zellmodule verschaltet werden, um so bevorzugt die maximale Stromgrenze zu beeinflussen.

Gemäß einem weiteren Aspekt kann der erste elektrische Energiespeicher einen ersten positiven äußeren (z. B. Hochvolt-)Leistungsanschluss und der zweite elektrische Energiespeicher einen zweiten positiven äußeren (z. B. Hochvolt-)Leistungsanschluss aufweisen. Beispielsweise kann der erste positive äußere Leistungsanschluss und/oder der zweite positive äußere Leistungsanschluss zum (z. B. äußeren) Anschluss einer Stromschiene und/oder eines Steckverbinders ausgebildet sein. Bevorzugt ist hierbei vorgehen, dass der erste und zweite positive äußere Leistungsanschluss (z. B. außerhalb des ersten und zweiten Energiespeichers) mittels des Verbindungssystems (z. B. mittels einer Stromschiene und/oder Kabelverbindung des Verbindungssystems) parallel zueinander elektrisch verbunden sind, vorzugsweise unabhängig vom jeweiligen Schaltzustand des Verbindungssystems. So können der erste und zweite positive äußere Leistungsanschluss z. B. immer und/oder dauerhaft parallel zueinander elektrisch verbunden sein.

Zudem oder alternativ kann der erste elektrische Energiespeicher auch einen ersten negativen äußeren (z. B. Hochvolt-)Leistungsanschluss und der zweite elektrische Energiespeicher einen zweiten negativen äußeren (z. B. Hochvolt-)Leistungsanschluss aufweisen. Beispielsweise kann der erste negative äußere Leistungsanschluss und/oder der zweite negative äußere Leistungsanschluss zum (z. B. äußeren) Anschluss einer Stromschiene und/oder eines Steckverbinders ausgebildet sein. Bevorzugt ist hierbei vorgehen, dass der erste und zweite negative äußere Leistungsanschluss (z. B. außerhalb des ersten und zweiten Energiespeichers) mittels des Verbindungssystems (z. B. mittels einer Stromschiene und/oder Kabelverbindung des Verbindungssystems) parallel zueinander elektrisch verbunden sind, vorzugsweise unabhängig vom jeweiligen Schaltzustand des Verbindungssystems. So können der erste und zweite negative äußere Leistungsanschluss z. B. immer und/oder dauerhaft parallel zueinander elektrisch verbunden sein.

Nach einem weiteren Aspekt kann die Energiespeichervorrichtung ferner eine Systemhochvoltschnittstelle zum Verbinden mit einem Bordnetzanschluss des Kraftfahrzeugs aufweisen. Bevorzugt ist die Systemhochvoltschnittstelle dabei mit dem ersten und/oder zweiten positiven äußeren Leistungsanschluss und/oder mit dem ersten und/oder zweiten positiven negativen Leistungsanschluss (z. B. mittels Stromschienen und/oder Kabelverbindungen) elektrisch verbunden. Besonders bevorzugt sind in dem Teil-Teil-Schaltzustand und/oder Teil-Alle-Schaltzustand (und/oder in weiteren der mehreren Schaltzustände) die miteinander elektrisch verbunden ersten und zweiten Zellmodule über das Verbindungssystem auch mit der Systemhochvoltschnittstelle elektrisch verbunden. Auf vorteilhafte Weise kann dadurch an der Systemhochvoltschnittstelle bedarfsgerecht ein jeweiliges Spannungsniveau bereitgestellt werden.

Gemäß einem weiteren Aspekt kann der erste elektrische Energiespeicher ein (z. B. allseitig geschlossenes) Energiespeichergehäuse (z. B. aus Aluminium) aufweisen, welches zur besseren Unterscheidung auch als erstes Energiespeichergehäuse bezeichnet werden kann. In dem (ersten) Energiespeichergehäuse können die mehreren ersten Zellmodule aufgenommen sein. Beispielsweise können die mehreren ersten Zellmodule von dem (ersten) Energiespeichergehäuse (z. B. vollständig) umhaust werden und/oder vom (ersten) Energiespeichergehäuse gegen äußere Umwelteinflüsse (wie z. B. Feuchtigkeit und/oder Schmutz) geschützt sein. Bevorzugt weist das (erste) Energiespeichergehäuse dabei eine umlaufende (erste) Seitenwand auf, die von einem (ersten) Boden und einem (ersten) Deckel verschlossen ist. Auf vorteilhafte Weise kann dadurch eine sichere und geschützte Lagerung der ersten Zellmodule gewährleistet werden.

Zudem oder alternativ kann auch der zweite elektrische Energiespeicher ein (z. B. allseitig geschlossenes) Energiespeichergehäuse (z. B. aus Kunststoff) aufweisen, welches zur besseren Unterscheidung auch als zweites Energiespeichergehäuse bezeichnet werden kann. In dem (zweiten) Energiespeichergehäuse können die mehreren zweiten Zellmodule aufgenommen sein. Beispielsweise können die mehreren zweiten Zellmodule von dem (zweiten) Energiespeichergehäuse (z. B. vollständig) umhaust werden und/oder vom (zweiten) Energiespeichergehäuse gegen äußere Umwelteinflüsse (wie z. B. Feuchtigkeit und/oder Schmutz) geschützt sein. Bevorzugt weist auch das (zweite) Energiespeichergehäuse eine umlaufende (zweite) Seitenwand auf, die von einem (zweiten) Boden und einem (zweiten) Deckel verschlossen ist. Auf vorteilhafte Weise kann dadurch eine sichere und geschützte Lagerung der zweiten Zellmodule gewährleistet werden.

Nach einem weiteren Aspekt kann das Verbindungssystem mindestens eine (z. B. lösbare) Kabelverbindung, mindestens eine (z. B. lösbare) Stromschienenverbindung und/oder mindestens eine (z. B. lösbare) Steckverbindung zwischen dem ersten und zweiten elektrischen Energiespeicher aufweisen. Beispielsweise kann der erste positive (oder negative) Leistungsanschluss des ersten elektrischen Energiespeichers und der zweite positive (oder negative) Leistungsanschluss des zweiten elektrischen Energiespeichers über die mindestens eine Kabelverbindung, Stromschienenverbindung und/oder Steckverbindung miteinander verbunden sein. Bevorzugt ist die mindestens eine Kabelverbindung, Stromschienenverbindung und/oder Steckverbindung von außen, bspw. ohne ein Öffnen des ersten oder zweiten Energiespeichergehäuses, zugänglich. Auf vorteilhafte Weise wird dadurch die Montage vereinfacht.

Zudem oder alternativ kann die Verarbeitungseinrichtung ein erstes Verarbeitungsmodul (z. B. ein erstes Batteriemanagementsystem) und ein zweites Verarbeitungsmodul (z. B. ein zweites Batteriemanagementsystem) umfassen. Das erste Verarbeitungsmodul kann dabei dem ersten elektrischen Energiespeicher zugeordnet sein, während das zweite Verarbeitungsmodul dem zweiten elektrischen Energiespeicher zugeordnet sein kann. Das erste Verarbeitungsmodul kann konfiguriert sein, die ersten Zellmodule (z. B. deren Ladungszustände, Spannungen, Ströme, Temperaturen etc.) zu überwachen und/oder einen Teil (z. B. den in der ersten Schaltbox aufgenommenen Teil) der mehreren Schaltelemente zu schalten. Zudem oder alternativ kann das zweite Verarbeitungsmodul konfiguriert sein, die zweiten Zellmodule (z. B. deren Ladungszustände, Spannungen, Ströme, Temperaturen etc.) zu überwachen und/oder einen anderen Teil (z. B. den in der zweiten Schaltbox aufgenommenen anderen Teil) der mehreren Schaltelemente zu schalten. Auf vorteilhafte Weise kann dadurch teilweise eine Dezentralisierung der Steuerung der Energiespeichervorrichtung ermöglicht werden.

Bevorzugt kommunizieren dabei das erste Verarbeitungsmodul und das zweite Verarbeitungsmodul untereinander nach dem Master-Slave-Prinzip. Beispielsweise kann eines der Verarbeitungsmodule (z. B. das erste Verarbeitungsmodul) als Master-Verarbeitungsmodul und das andere Verarbeitungsmodul (z. B. das zweite Verarbeitungsmodul) als Slave-Verarbeitungsmodul ausgebildet und/oder konfiguriert sein.

Gemäß einem weiteren Aspekt können der erste elektrische Energiespeicher und der zweite elektrische Energiespeicher als Gleichteile ausgebildet sein. Bevorzugt weisen der erste und zweite elektrische Energiespeicher damit eine gleiche Größe, Ausstattung und Anzahl an Komponenten auf. Dies vereinfacht auf vorteilhafte Weise die Fertigung der Energiespeichervorrichtung und deren Montage im Kraftfahrzeug.

Alternativ dazu können der erste elektrische Energiespeicher und der zweite elektrische Energiespeicher auch unterschiedlich ausgebildet sein. Beispielsweise kann sich eine Anzahl (oder Art) der ersten Zellmodule des ersten Energiespeichers von einer Anzahl (oder Art) der zweiten Zellmodulen des zweiten Energiespeichers unterscheiden. Zudem oder alternativ kann sich auch eine Anzahl (oder Art) der ersten Speicherzellen der ersten Zellmodule von einer Anzahl (oder Art) der zweiten Speicherzellen der zweiten Zellmodule unterscheiden. Lediglich beispielhaft kann der erste elektrische Energiespeicher bspw. eine 180S1P-Konfiguration (12S1P x 15 Module) aufweisen, während der zweite elektrische Energiespeicher eine 216S1P-Konfiguration (12S1P x 18 Module) aufweisen kann.

Nach einem weiteren Aspekt kann der erste elektrische Energiespeicher zumindest ein Schaltschütz aufweisen, welches zur besseren Unterscheidung bspw. auch als erstes Schaltschütz bezeichnet werden kann. Beispielsweise kann das zumindest eine (erste) Schaltschütz zwei Schaltschütze aufweisen, wobei eines dem ersten positiven äußeren Leistungsanschluss und das andere dem ersten negativen äußeren Leistungsanschluss zugeordnet ist. Das zumindest eine (erste) Schaltschütz des ersten elektrischen Energiespeichers kann dabei Teil des Verbindungssystems sein.

Zudem oder alternativ kann auch der zweite elektrische Energiespeicher zumindest ein Schaltschütz aufweisen, welches zur besseren Unterscheidung bspw. auch als zweites Schaltschütz bezeichnet werden kann. Beispielsweise kann das zumindest eine (zweite) Schaltschütz zwei Schaltschütze aufweisen, wobei eines dem zweiten positiven äußeren Leistungsanschluss und das andere dem zweiten negativen äußeren Leistungsanschluss zugeordnet ist. Auch das zumindest eine (zweite) Schaltschütz des zweiten elektrischen Energiespeichers kann Teil des Verbindungssystems sein.

Gemäß einem weiteren Aspekt kann der erste elektrische Energiespeicher mindestens zwölf, vorzugsweise mindestens vierzehn, besonders bevorzugt mindestens achtzehn, (z. B. gleiche) erste Zellmodule aufweisen.

Zudem oder alternativ kann auch der zweite elektrische Energiespeicher mindestens zwölf, vorzugsweise mindestens vierzehn, besonders bevorzugt mindestens achtzehn, (z. B. gleiche) zweite Zellmodule aufweisen.

Nach einem weiteren Aspekt können der erste elektrische Energiespeicher und der zweite elektrische Energiespeicher jeweils als Hochvolt-Energiespeicher ausgebildet sein. Beispielsweise können der erste und zweite elektrische Energiespeicher zum Betreiben mit einer Gleichspannung zwischen 24 V und 1,5 kV, vorzugsweise zwischen 60 V und 1,5 kV, besonders bevorzugt zwischen 400 V und 850 V, ausgebildet sein.

Vorstehend wurden aus Gründen der Übersichtlichkeit vorrangig zwei elektrische Energiespeicher der Energiespeichervorrichtung beschrieben. Grundsätzlich kann die Energiespeichervorrichtung jedoch auch weitere elektrische Energiespeicher aufweisen.

Beispielsweise kann die Energiespeichervorrichtung nach einem weiteren Aspekt mindestens einen weiteren Energiespeicher aufweisen. Der mindestens eine weitere elektrische Energiespeicher kann seinerseits mehrere weitere Zellmodule aufweisen, die jeweils mehrere in Serie verschaltete weitere Speicherzellen (z. B. Lithium-Ionen-Speicherzellen) aufweisen können. Bevorzugt umfasst der mindestens eine weitere Energiespeicher sechs bis zehn weitere (z. B. gleiche) Energiespeicher.

Weiterhin ist es auch möglich, dass in dem Teil-Teil-Schaltzustand ausschließlich der Teil der ersten Zellmodule und der Teil der zweiten Zellmodule (z. B. ohne Verbindung zu irgendeinem weiteren Zellmodul) miteinander (z. B. in Serie oder parallel oder in einer kombinierten Reihen-Parallel-Schaltung) elektrisch verbunden sind und/oder dass im Teil-Alle-Schaltzustand ausschließlich der Teil der ersten Zellmodule und alle zweite Zellmodule (z. B. ohne Verbindung zu irgendeinem weiteren Zellmodul) miteinander (z. B. in Serie oder parallel oder in einer kombinierten Reihen-Parallel-Schaltung) elektrisch verbunden sind.

Ein weiterer unabhängiger Aspekt der vorliegenden Offenbarung betrifft ein Kraftfahrzeug (z. B. ein Hybrid- oder Elektrofahrzeug) aufweisend eine Energiespeichervorrichtung, wie hierin beschrieben. Bevorzugt ist das Kraftfahrzeug ein Nutzfahrzeug (z. B. ein Hybridnutzfahrzeug oder Elektronutzfahrzeug). Unter einem Nutzfahrzeug kann dabei im Allgemeinen bspw. ein Fahrzeug verstanden werden, das durch seine Bauart und Einrichtung speziell zur Beförderung von Personen, zum Transport von Gütern oder zum Ziehen von Anhängerfahrzeugen ausgelegt ist. Beispielsweise kann das Nutzfahrzeug ein Lastkraftwagen, ein Sattelschlepper, ein Baustellenfahrzeug und/oder ein Omnibus sein. Das Kraftfahrzeug kann hierbei ausgebildet sein, der Verarbeitungseinrichtung (z. B. über eine entsprechende Signalverbindung) mindestens eine Zielkriterium bzw. das mindestens eine Zielkriterium zu übermitteln, bspw. eine aktuell benötigtes Spannungsniveau.

Die zuvor beschriebenen Ausführungsformen und Merkmale sind beliebig miteinander kombinierbar. Weitere Einzelheiten und Vorteile werden im Folgenden unter Bezug auf die beigefügten Zeichnungen beschrieben. Es zeigen:
- Figur 1 bis 3: schematische Darstellungen einer Energiespeichervorrichtung für ein Kraftfahrzeug gemäß einer Ausführungsform; und
- Figuren 4 bis 10: schematische Darstellungen verschiedener Schaltzustände einer Energiespeichervorrichtung für ein Kraftfahrzeug gemäß einer weiteren Ausführungsform;

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsform bzw. Figuren verwiesen wird, um Wiederholungen zu vermeiden.

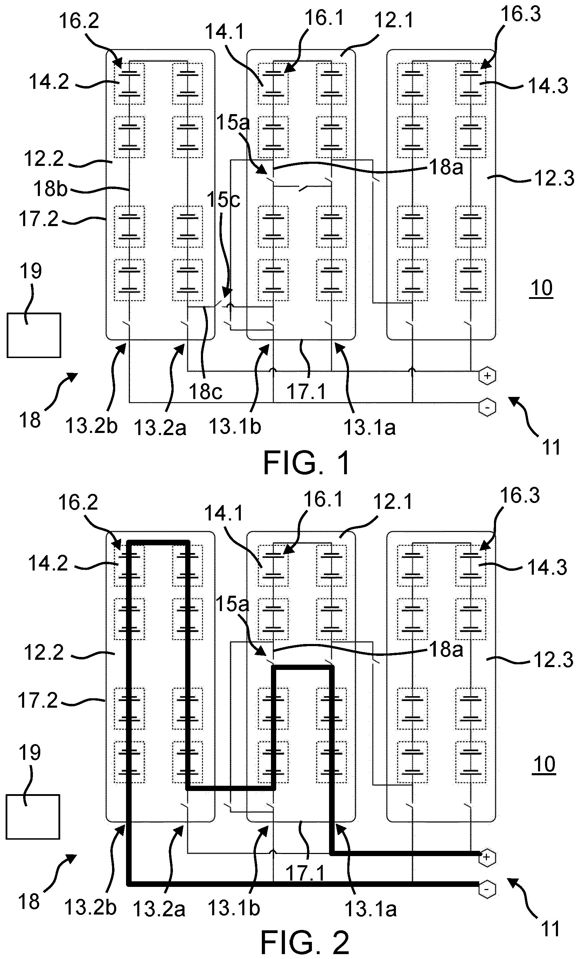

Die Figuren 1 bis 10 zeigen jeweils eine Energiespeichervorrichtung 10 für ein Kraftfahrzeug (nicht dargestellt). Die Energiespeichervorrichtung 10 kann elektrische Energie für eine elektrische Antriebseinheit zum Antreiben des Kraftfahrzeugs bereitstellen. Die elektrische Antriebseinheit kann dabei bspw. einen zentralen Elektroantrieb, mehrere Elektroradnabenantriebe und/oder mehrere radnahe Elektroantriebe aufweisen.

Die Energiespeichervorrichtung 10 kann als eine Hochvolt-Energiespeichervorrichtung ausgeführt sein. Beispielsweise kann die Energiespeichervorrichtung bzw. Hochvolt-Energiespeichervorrichtung mit einer Gleichspannung zwischen 60 V und 1,5 kV, besonders bevorzugt zwischen 400 V und 850 V, betrieben werden bzw. betreibbar sein.

Die Energiespeichervorrichtung 10 weist einen ersten elektrischen Energiespeicher 12.1, einen zweiten elektrischen Energiespeicher 12.2, ein schaltbares Verbindungssystem 18 und eine Verarbeitungseinrichtung 19 auf.

Der erste elektrische Energiespeicher 12.1 weist mehrere erste Zellmodule 14.1 auf, die jeweils mehrere in Serie verschaltete erste Speicherzellen 16.1 aufweisen. Bevorzugt sind die mehreren ersten Zellmodule 14.1 alle gleich ausgebildet. Es ist jedoch auch möglich, dass sich die mehreren ersten Zellmodule 14.1 zumindest teilweise unterscheiden, bspw. zumindest teilweise eine unterschiedliche Anzahl von ersten Speicherzellen 16.1 aufweisen.

In den ersten Speicherzellen 16.1 kann elektrische Energie speicherbar sein. Beispielsweise können die ersten Speicherzellen 16.1 Lithium-Ionen-Speicherzellen sein. Bevorzugt handelt es sich bei den ersten Speicherzellen 16.1 um prismatische Speicherzellen, die innerhalb eines jeweiligen ersten Zellmoduls 14.1 bspw. entlang einer Stapelrichtung aneinander gestapelt sein können. Die ersten Speicherzellen 16.1 können jedoch grundsätzlich auch Rundspeicherzellen, Pouch-Speicherzellen, oder Speicherzellen eines anderen Zellformats aufweisen

Jedes der ersten Zellmodule 14.1 kann ein (z. B. geschlossenes) Zellmodulgehäuse (nicht dargestellt) aufweisen. In den Zellmodulgehäusen kann jeweils eine vorbestimmte Anzahl an ersten Speicherzellen 16.1 aufgenommen sein. Die ersten Speicherzellen 16.1 können mittels ihres jeweiligen Zellmodulgehäuses verspannt sein. Beispielsweise können die (bevorzugt gestapelten) ersten Speicherzellen 16.1 eines jeden der ersten Zellmodule 14.1 zwischen zwei Endplatten des jeweiligen Zellmodulgehäuses und/oder zwischen zwei Seitenplatten des jeweiligen Zellmodulgehäuses verspannt aufgenommen sein. Zudem oder alternativ können die ersten Speicherzellen 16.1 mit ihrem jeweiligen Zellmodulgehäuse auch verklebt und/oder verschraubt sein. Zudem oder alternativ können die ersten Zellmodule 14.1 zumindest teilweise in mehreren Lagen bzw. Ebenen (z. B. übereinander) angeordnet sein.

Der erste elektrische Energiespeicher 12.1 kann ferner ein erstes Energiespeichergehäuse 17.1 aufweisen, in dem die mehreren ersten Zellmodule 14.1 aufgenommen sind. Die ersten Zellmodule 14.1 können somit von dem ersten Energiespeichergehäuse 17.1 umgeben sein und/oder gegen äußere Umwelteinflüsse (z. B. Feuchtigkeit oder Schmutz) geschützt sein. Das erstes Energiespeichergehäuse 17.1 kann bspw. kastenförmig ausgebildet sein und/oder als Berührschutz dienen.

Der erste elektrische Energiespeicher 12.1 kann ferner einen ersten positiven äußeren Leistungsanschluss 13.1a und einen ersten negativen äußeren Leistungsanschluss 13.1b aufweisen. Beispielsweise kann der erste positive äußere Leistungsanschluss 13.1a und/oder der erste negative äußere Leistungsanschluss 13.1b zum Anschluss einer Stromschiene und/oder eines Steckverbinders ausgebildet sein, vorzugsweise, ohne dass hierfür das erste Energiespeichergehäuse 17.1 geöffnet werden muss. Sowohl der erste positive äußere Leistungsanschluss 13.1a als auch der erste negative äußere Leistungsanschluss 13.1b können je über ein Schaltschütz und/oder eine Sicherung (z. B. Schmelzsicherung) des ersten elektrischen Energiespeichers 12.1 abgesichert sein.

Der zweite elektrische Energiespeicher 12.2 kann grundsätzlich die im Zusammenhang mit dem ersten elektrischen Energiespeicher 12.1 beschriebenen Merkmale aufweisen, wobei lediglich der Ausdruck "erste" durch "zweite" zu ersetzen ist.

So kann auch der zweite elektrische Energiespeicher 12.2 bspw. mehrere zweite Zellmodule 14.2 aufweisen, die jeweils mehrere in Serie verschaltete zweite Speicherzellen 16.2 aufweisen. Wie im Fall der ersten Speicherzellen 16.1 können auch die zweiten Speicherzellen 16.2 z. B. prismatische Speicherzellen, Rundspeicherzellen und/oder Pouch-Speicherzellen aufweisen und/oder als Lithium-Ionen-Speicherzellen ausgebildet sein. Zudem oder alternativ könne auch die zweiten Speicherzellen 16.2 entlang einer Stapelrichtung aneinander gestapelt sein. Die zweiten Zellmodule 14.2 können grundsätzlich die Merkmale der ersten Zellmodule 14.1 aufweisen, wobei auch hier lediglich der Ausdruck "erste" durch "zweite" zu ersetzen ist.

Der erste und zweite elektrische Energiespeicher 12.1 12.2 können gleich ausgebildet sein. Beispielsweise können der erste und zweite elektrische Energiespeicher 12.1, 12.2 als Gleichteile ausgebildet sein. Es ist allerdings auch möglich, dass sich der erste und zweite elektrische Energiespeicher 12.1, 12.2 in ihrer jeweiligen Ausführung unterscheiden. Beispielsweise kann sich eine Anzahl von ersten Zellmodulen 14.1 und eine Anzahl von zweiten Zellmodulen 14.2 unterscheiden.

Weiterhin kann der zweite elektrische Energiespeicher 12.2 ein vom ersten Energiespeichergehäuse 17.1 separates zweites (z. B. kastenförmiges) Energiespeichergehäuse 17.2 aufweisen. In dem zweiten Energiespeichergehäuse 17.2 können die mehreren zweiten Zellmodule 14.2 - getrennt von den mehreren ersten Zellmodule 14.1 - aufgenommen sein und/oder gegen äußere Umwelteinflüsse (z. B. Feuchtigkeit oder Schmutz) geschützt sein. Weiterhin kann auch der zweite elektrische Energiespeicher 12.2 einen zweiten positiven äußeren Leistungsanschluss 13.2a und einen zweiten negativen äußeren Leistungsanschluss 13.2b aufweisen. Sowohl der zweite positive äußere Leistungsanschluss 13.2a als auch der zweite negative äußere Leistungsanschluss 13.2b können je über ein Schaltschütz und/oder eine Fehlerstromschutzeinrichtung (z. B. eine oder mehrere Schmelzsicherungen) des zweiten elektrischen Energiespeichers 12.2 abgesichert sein.

Bevorzugt sind der erste elektrische Energiespeicher 12.1 und der zweite elektrische Energiespeicher 12.2 voneinander beabstandet angeordnet und/oder gleich orientiert. Weiterhin kann der erste elektrische Energiespeicher 12.1 und/oder zweite elektrische Energiespeicher 12.2 extern über ein an einer Ladesteckdose des Kraftfahrzeugs angeschlossenes elektrisches Ladekabel aufladbar sein.

Um ein möglichst flexibles Verschalten zu ermöglichen, kann das schaltbare Verbindungssystem 18 mehrere Leitungsabschnitte 18a, 18b, 18c und/oder mehrere Schaltelemente 15a, 15b, 15c (z. B. MOSFETs, IGBTs und/oder JFETs) aufweisen. Dadurch können der erste und zweite elektrische Energiespeicher 12.1, 12.2 und/oder die ersten Zellmodule 14.1 und zweiten Zellmodule 14.2 in unterschiedlichen Schaltzuständen miteinander elektrisch verbindbar sein.

Die mehreren Leitungsabschnitte 18a, 18b 18c bzw. die mehreren Schaltelemente 15a, 15b, 15c können dabei teilweise innerhalb des ersten und/oder zweiten elektrischen Energiespeichers 12.1, 12.2, insbesondere innerhalb des ersten und/oder zweiten Energiespeichergehäuses 17.1, 17.2, angeordnet sein. Beispielsweise kann der erste elektrische Energiespeicher 12.1 eine erste Schaltbox aufweisen, in der ein Teil der mehreren Schaltelemente 15a, 15b, 15c aufgenommen ist. Ferner können der Teil der mehreren Schaltelemente 15a, 15b, 15c und der andere Teil der mehreren Schaltelemente 15a, 15b, 15c jeweils eine gleiche oder unterschiedliche Anzahl von Schaltelementen 15a, 15b, 15c aufweisen. Die erste Schaltbox kann dabei innerhalb des ersten Energiespeichergehäuses 17.1 angebracht sein und/oder in das erste Energiespeichergehäuse 17.1 integriert sein. Zudem oder alternativ kann auch der zweite elektrische Energiespeicher 12.2 eine zweite Schaltbox aufweisen, in der ein anderer Teil der mehreren Schaltelemente 15a, 15b, 15c aufgenommen ist. Die zweite Schaltbox kann innerhalb des zweiten Energiespeichergehäuses 17.2 angebracht sein und/oder in das zweite Energiespeichergehäuse 17.2 integriert sein.

Die mehreren Leitungsabschnitte 18a, 18b 18c können in einer Ausführungsform mehrere erste Leitungsabschnitte 18a aufweisen, über die (z. B. paarweise) jeweils zwei der ersten Zellmodule 14.1 in Serie miteinander verbunden sind. Beispielsweise können sich die mehreren ersten Leitungsabschnitte 18a jeweils zwischen einem negativen (oder positiven) Ausgang eines der ersten Zellmodule 14.1 und einem positiven (oder negativen) Eingang eines weiteren der ersten Zellmodule 14.1 erstrecken.

Ferner können die mehreren Leitungsabschnitte 18a, 18b 18c in einer Ausführungsform auch mehrere zweite Leitungsabschnitte 18b aufweisen, über die (z. B. paarweise) jeweils zwei der zweiten Zellmodule 14.2 in Serie miteinander verbunden sind. Beispielsweise können sich die mehreren zweiten Leitungsabschnitte 18b jeweils zwischen einem negativen (oder positiven) Ausgang eines der zweiten Zellmodule 14.2 und einem positiven (oder negativen) Eingang eines weiteren der zweiten Zellmodule 14.2 erstrecken.

Weiterhin können die mehreren Leitungsabschnitte 18a, 18b 18c mindestens einen Kopplungsleitungsabschnitt 18c aufweisen, über den eines der ersten Zellmodule 14.1 und eines der zweiten Zellmodule 14.2 in Serie miteinander verbunden sind (vgl. Figuren 1 und 2). Beispielsweise kann sich der mindestens einen Kopplungsleitungsabschnitt 18c zwischen einem negativen (oder positiven) Ausgang eines der ersten Zellmodule 14.1 und einem positiven (oder negativen) Eingang eines der zweiten Zellmodule 14.2 erstrecken.

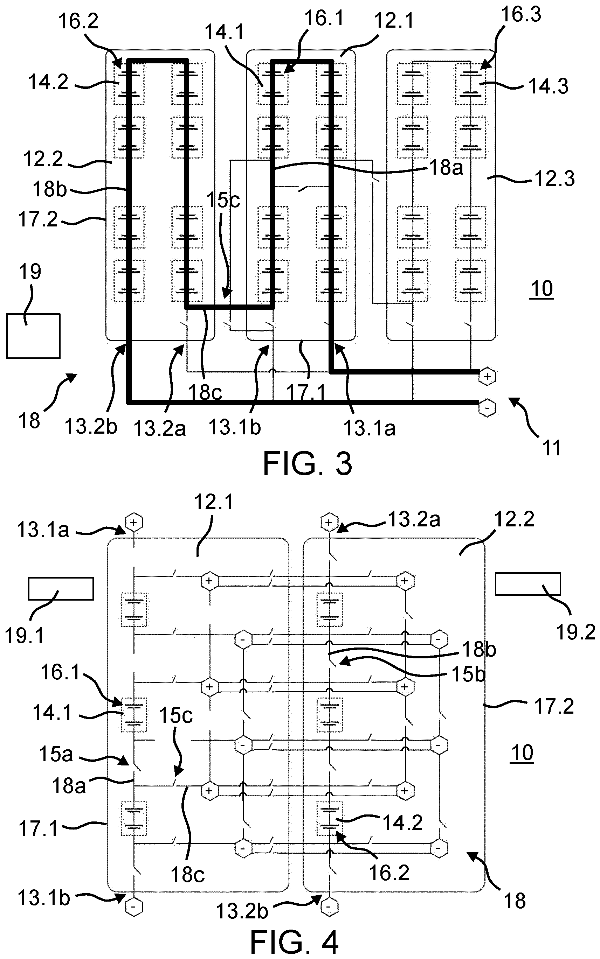

Bevorzugt weisen die mehreren Leitungsabschnitte 18a, 18b 18c, wie in den Figuren 4 bis 10 dargestellt, mehrere Kopplungsleitungsabschnitte 18c auf, über die jeweils eines der ersten Zellmodule 14.1 und jeweils eines der zweiten Zellmodule 14.2 (z. B. paarweise) in Serie miteinander verbunden sind. Die mehreren Kopplungsleitungsabschnitte 18c können dabei, wie in den Figuren 4 bis 10 dargestellt, mehrere positive Kopplungsleitungsabschnitte und mehrere negative Kopplungsleitungsabschnitte umfassen. Jedem ersten bzw. zweiten Zellmodule 14.1, 14.2 kann dabei jeweils ein positiver und negativer Kopplungsleitungsabschnitt zugeordnet sein. Beispielsweise kann jeder (z. B. positive) Eingang jedes der ersten Zellmodule 14.1 über jeweils einen positiven Kopplungsleitungsabschnitt mit je einem (z. B. positiven) Eingang eines der zweiten Zellmodule 14.2 in Serie verbunden sein, während jeder (z. B. negative) Ausgang jedes der ersten Zellmodule 14.1 über jeweils einen negativen Kopplungsleitungsabschnitt mit je einem (z. B. negativen) Ausgang eines der zweiten Zellmodule 14.2 in Serie verbunden sein kann. Weiterhin können die positiven Kopplungsleitungsabschnitte jeweils über positive Stichleitungsabschnitte (z. B. netzwerkartig) verbunden sein, während die negativen Kopplungsleitungsabschnitte jeweils über negative Stichleitungsabschnitte (z. B. netzwerkartig) verbunden sein können.

Weiterhin können die mehreren Schaltelemente 15a, 15b, 15c mehrere erste Schaltelemente 15a, mehrere zweite Schaltelemente 15b und mindestens ein Kopplungsschaltelement 15c aufweisen.

Bevorzugt ist dabei jeweils eines der mehreren ersten Schaltelemente 15a in jeweils einem der mehreren ersten Leitungsabschnitte 18a angeordnet und jeweils eines der mehreren zweiten Schaltelemente 15b in jeweils einem der mehreren zweiten Leitungsabschnitte 18b angeordnet. Durch Öffnen und Schließen der mehreren ersten Schaltelemente 15a kann dadurch jeweils eine elektrische Verbindung zwischen den, über den jeweiligen ersten Leitungsabschnitt 18a verbundenen, ersten Zellmodulen 14.1 wahlweise trennbar oder ausbildbar sein. Entsprechend kann durch Öffnen und Schließen der mehreren zweiten Schaltelemente 15b jeweils eine elektrische Verbindung zwischen den, über den jeweiligen zweiten Leitungsabschnitt 18b verbundenen, zweiten Zellmodulen 14.2 wahlweise trennbar oder ausbildbar sein.

Das mindestens eine Kopplungsschaltelement 15c kann in dem mindestens einen Kopplungsleitungsabschnitt 18c angeordnet sein. Durch Öffnen und Schließen des mindestens eine Kopplungsschaltelement 15c eine (z. B. energiespeicherübergreifende) elektrische Verbindung zwischen dem, über den mindestens einen Kopplungsleitungsabschnitt 18c verbundenen, ersten und zweiten Zellmodul 14.1, 14.2 wahlweise trennbar oder ausbildbar sein. Im Fall, dass die mehreren Leitungsabschnitte 18a, 18b 18c mehrere Kopplungsleitungsabschnitte 18c aufweisen (vgl. Figuren 4 bis 10), können die mehreren Schaltelemente 15a, 15b, 15c auch mehrere Kopplungsschaltelemente 15c aufweisen, wobei bevorzugt jeweils eines der mehreren Kopplungsschaltelemente 15c in jeweils einem der mehreren Kopplungsleitungsabschnitte 18c angeordnet ist. Falls zweckdienlich, können zusätzlich auch noch weitere Schaltelemente in den jeweiligen Kopplungsleitungsabschnitten 18c angeordnet und/oder vorhanden sein und/oder zusätzliche Schaltelemente in den positiven und/oder negativen Stichleitungsabschnitten angeordnet und/oder vorhanden sein. Weiterhin können im Fall, dass die mehreren Kopplungsleitungsabschnitte 18c mehrere positive und/oder negative Kopplungsleitungsabschnitte umfassen, die mehreren Kopplungsschaltelemente 15c auch mehrere positive Kopplungsschaltelemente aufweisen, wobei bevorzugt jeweils eines der mehreren positiven Kopplungsschaltelemente in jeweils einem der mehreren positiven Kopplungsleitungsabschnitte angeordnet ist, und/oder mehrere negative Kopplungsschaltelemente aufweisen, wobei bevorzugt jeweils eines der mehreren negativen Kopplungsschaltelemente in jeweils einem der mehreren negativen Kopplungsleitungsabschnitte angeordnet ist.

Zudem oder alternativ können mehreren Leitungsabschnitte 18a, 18b, 18c und/oder die mehreren Schaltelemente 15a, 15b, 15c zumindest teilweise außerhalb des ersten und/oder zweiten elektrischen Energiespeichers 12.1, 12.2, insbesondere außerhalb des ersten und/oder zweiten Energiespeichergehäuses 17.1, 17.2, angeordnet sein. Weiterhin kann das Verbindungssystem 18 mindestens einen (z. B. nicht-schaltbaren) Energiespeicherverbindungsabschnitt aufweisen. Der mindestens eine Energiespeicherverbindungsabschnitt kann bspw. eine Kabelverbindung, Stromschienenverbindung und/oder Steckverbindung zwischen dem ersten und zweiten elektrischen Energiespeicher 12.1, 12.2 umfassen.

Bevorzugt weist die mindestens eine Energiespeicherverbindungsabschnitt einen ersten Energiespeicherverbindungsabschnitt, welche den ersten und zweiten positiven äußeren Leistungsanschluss 13.1a, 13.2a parallel zueinander elektrisch verbindet, und einen zweiten Energiespeicherverbindungsabschnitt, welche den ersten und zweiten negativen äußeren Leistungsanschluss 13.1b, 13.2b parallel zueinander elektrisch verbindet, auf. Der erste Energiespeicherverbindungsabschnitt sowie der zweite Energiespeicherverbindungsabschnitt können ferner mit einer Systemhochvoltschnittstelle 11 zum Verbinden mit einem Bordnetzanschluss des Kraftfahrzeugs verbunden sein.

Wie vorstehend beschrieben, weist das Verbindungssystem 18 mehrere Schaltzustände auf. Bevorzugt sind diese dabei mittels der Verarbeitungseinrichtung 19 einstellbar. So kann bspw. die Verarbeitungseinrichtung 19 konfiguriert sein, das Verbindungssystem 18 wahlweise in einen der mehreren, im Folgenden noch eingehender beschriebenen, Schaltzustände zu versetzen. Beispielsweise können die Verarbeitungseinrichtung 19 und das Verbindungssystem 18, vorzugsweise die Verarbeitungseinrichtung 19 und die Schaltelemente 15, dazu über entsprechende Steuerleitungen (nicht dargestellt) verbunden sein. Die Verarbeitungseinrichtung 19 kann (z. B. über die Steuerleitungen) entsprechende Steuersignale an die mehreren Schaltelemente 15 ausgeben, wodurch diese jeweils wahlweise einen geöffneten oder geschlossenen Zustand einnehmen.

Die Verarbeitungseinrichtung 19 kann eine zentrale Verarbeitungseinrichtung sein (vgl. Figuren 1 bis 3). Es ist allerdings auch möglich, dass die Verarbeitungseinrichtung 19 ein erstes Verarbeitungsmodul 19.1 und ein zweites Verarbeitungsmodul 19.2 umfasst (vgl. Figuren 4 bis 10). Das erste Verarbeitungsmodul 19.1 kann dabei dem ersten elektrischen Energiespeicher 12.1 zugeordnet sein, während das zweite Verarbeitungsmodul 19.2 dem zweiten elektrischen Energiespeicher 12.2 zugeordnet sein kann. Das erste Verarbeitungsmodul 19.1 und das zweite Verarbeitungsmodul 19.2 können über eine Signalleitung (nicht dargestellt) miteinander verbunden sein. Das erste und zweite Verarbeitungsmodul 19.1, 19.2 können untereinander bspw. nach dem Master-Slave-Prinzip kommunizieren und/oder nach dem Master-Slave-Prinzip konfiguriert sein.

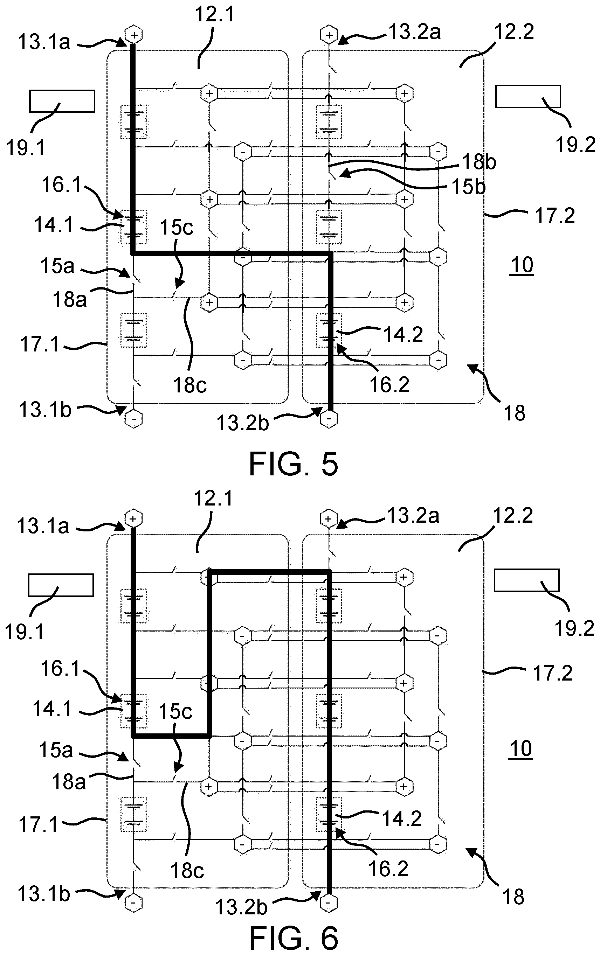

Wie vorstehend erwähnt, weist das Verbindungssystem 18 mehrere Schaltzustände auf. Einer dieser Schaltzustände kann ein Teil-Alle-Schaltzustand sein, in dem lediglich bzw. nur ein Teil der ersten Zellmodule 14.1 und alle zweiten Zellmodule 14.2 miteinander elektrisch verbunden sind (vgl. Figuren 2 und 6). Beispielsweise kann der Teil der ersten Zellmodule 14.1 aus einer Hälfte, vorzugsweise einem Drittel, besonders bevorzugt einem Viertel, der ersten Zellmodule 14.1 oder nur aus einem einzigen der ersten Zellmodule 14.1 bestehen. Die restlichen der ersten Zellmodule 14.1 können dabei z. B. elektrisch abgetrennt und/oder abgekoppelt sein.

Bevorzugt sind in dem Teil-Alle-Schaltzustand der Teil der ersten Zellmodule 14.1 und alle zweiten Zellmodule 14.2 (z. B. ausschließlich) in Serie miteinander elektrisch verbunden. Entsprechend kann hier von einer erweiterten und/oder energiespeicherübergreifenden Reihenschaltung gesprochen werden. Grundsätzlich können der Teil der ersten Zellmodule 14.1 und alle zweiten Zellmodule 14.2 allerdings auch parallel zueinander und/oder in einer kombinierten Reihen-Parallel-Schaltung miteinander elektrisch verbunden sein. Weiterhin können in dem Teil-Alle-Schaltzustand ausschließlich der Teil der ersten Zellmodule 14.1 und alle zweiten Zellmodule 14.2 (z. B. ohne Verbindung zu irgendeinem weiteren Zellmodul) miteinander elektrisch verbunden sein. Grundsätzlich ist es jedoch auch möglich, dass der Teil der ersten Zellmodule 14.1 und alle zweiten Zellmodule 14.2 zusätzlich auch mit mindestens einem weiteren Zellmodul 14.3 mindestens eines weiteren Energiespeichers 12.3 der Energiespeichervorrichtung 10 (z. B. in Serie oder parallel oder in einer kombinierten Reihen-Parallel-Schaltung) elektrisch verbunden sind. Ferner sind in dem Teil-Alle-Schaltzustand bevorzugt die miteinander elektrisch verbundenen ersten und zweiten Zellmodule 14.1, 14.2 über das Verbindungssystem 18 (z. B. den mindestens einen Energiespeicherverbindungsabschnitt) auch mit der Systemhochvoltschnittstelle 11 elektrisch verbunden.

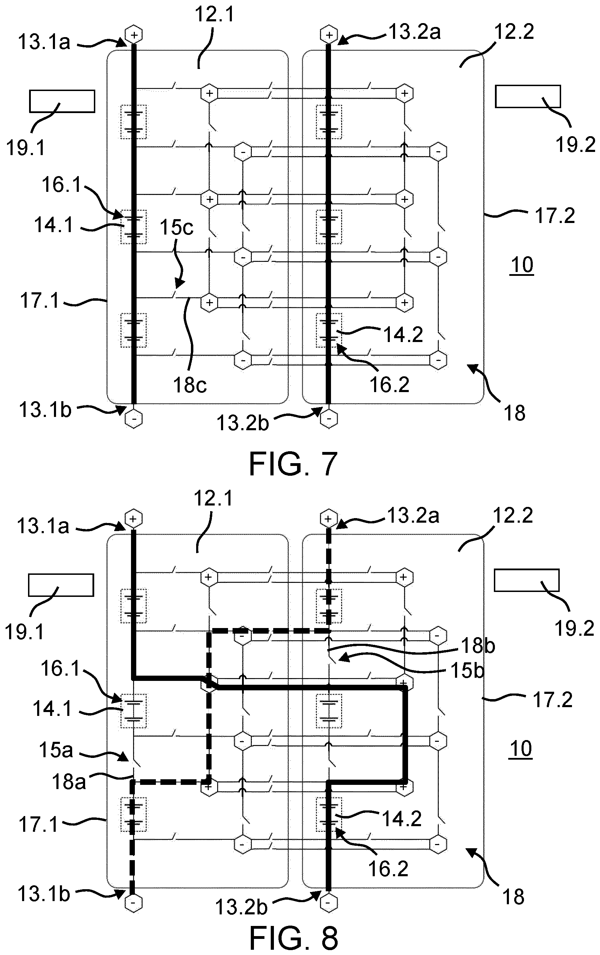

Zudem oder alternativ zu dem vorstehend beschriebenen Teil-Alle-Schaltzustand können die mehreren Schaltzustände einen Teil-Teil-Schaltzustand umfassen, in dem lediglich bzw. nur ein Teil der ersten Zellmodule 14.1 und lediglich bzw. nur ein Teil der zweiten Zellmodule 14.2 miteinander elektrisch verbunden sind (vgl. z. B. Figuren 5 und 8). Wie im Fall des Teil-Alle-Schaltzustands kann der Teil der ersten Zellmodule 14.1 bspw. aus einer Hälfte, vorzugsweise einem Drittel, besonders bevorzugt einem Viertel, der ersten Zellmodule 14.1 oder nur aus einem einzigen der ersten Zellmodule 14.1 bestehen. Die restlichen der ersten Zellmodule 14.1 können dabei z. B. elektrisch abgetrennt und/oder abgekoppelt sein. Zudem oder alternativ kann der Teil der zweiten Zellmodule 14.2 bspw. aus einer Hälfte, vorzugsweise einem Drittel, besonders bevorzugt einem Viertel, der zweiten Zellmodule 14.2 oder nur aus einem einzigen der zweiten Zellmodule 14.2 bestehen. Die restlichen der zweiten Zellmodule 14.2 können dabei z. B. elektrisch abgetrennt und/oder abgekoppelt sein.

Bevorzugt sind in dem Teil-Teil-Schaltzustand der Teil der ersten Zellmodule 14.1 und der Teil der zweiten Zellmodule 14.2 in Serie miteinander elektrisch verbunden (vgl. Figur 5). Entsprechend kann auch hier von einer erweiterten und/oder energiespeicherübergreifenden Reihenschaltung gesprochen werden. Grundsätzlich können der Teil der ersten Zellmodule 14.1 und der Teil der zweiten Zellmodule 14.2 allerdings auch parallel zueinander und/oder in einer kombinierten Reihen-Parallel-Schaltung miteinander elektrisch verbunden sein. Beispielsweise können, wie in Figur 8 dargestellt, ein (erstes) Zellmodul 14.1 von dem Teil der ersten Zellmodule 14.1 und ein (zweites) Zellmodul 14.2 von dem Teil der zweiten Zellmodule 14.2 in einer Parallelschaltung miteinander verbunden sein und ein anderes (erstes) Zellmodul 14.1 von dem Teil der ersten Zellmodule 14.1 und ein anderes (zweites) Zellmodul 14.2 von dem Teil der zweiten Zellmodule 14.2 in einer weiteren Parallelschaltung miteinander verbunden sein, wobei die Parallelschaltung und weitere Parallelschaltung zur Ausbildung einer Reihen-Parallel-Schaltung in Serie verbunden sein können.

Weiterhin können in dem Teil-Teil-Schaltzustand ausschließlich der Teil der ersten Zellmodule 14.1 und der Teil der zweiten Zellmodule 14.2 (z. B. ohne Verbindung zu irgendeinem weiteren Zellmodul) miteinander elektrisch verbunden sein. Grundsätzlich ist es jedoch auch möglich, dass der Teil der ersten Zellmodule 14.1 und der Teil der zweiten Zellmodule 14.2 zusätzlich auch mit mindestens einem (bzw. dem) weiteren Zellmodul mindestens eines (bzw. des mindestens einen) weiteren Energiespeichers der Energiespeichervorrichtung 10 (z. B. in Serie oder parallel oder in einer kombinierten Reihen-Parallel-Schaltung) elektrisch verbunden sind.

Ferner sind auch in dem Teil-Teil-Schaltzustand bevorzugte die miteinander elektrisch verbunden ersten und zweiten Zellmodule 14.1, 14.2 über das Verbindungssystem 18 (z. B. den mindestens einen Energiespeicherverbindungsabschnitt) auch mit der Systemhochvoltschnittstelle 11 elektrisch verbunden.

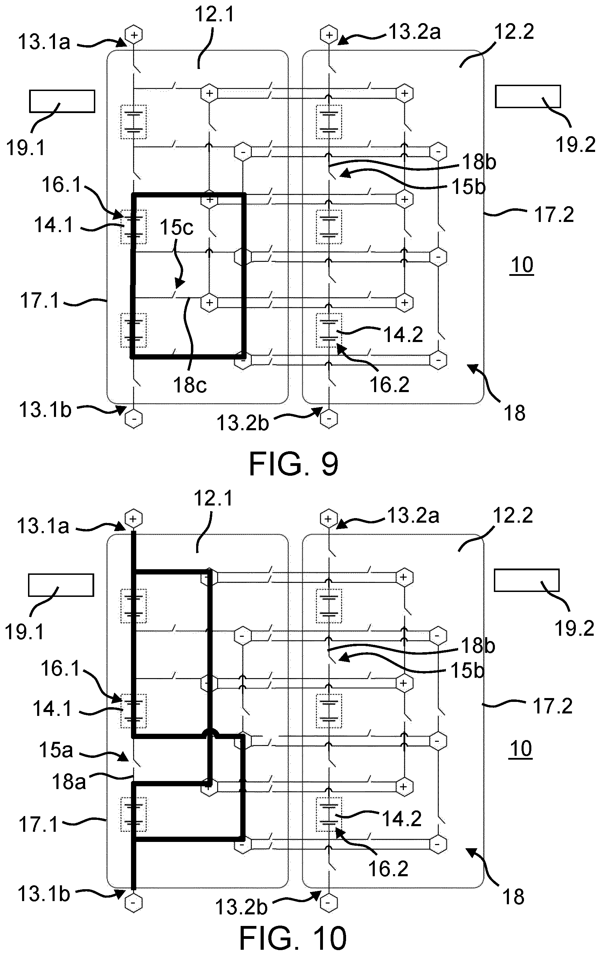

Zusätzlich zum Teil-Alle-Schaltzustand und/oder Teil-Teil-Schaltzustand können die mehreren Schaltzustände bspw. zumindest einen der folgenden Schaltzustände aufweisen:
- einen Serienschaltzustand (vgl. Figur 3), in welchem alle ersten Zellmodule 14.1 und alle zweiten Zellmodule 14.2 miteinander in Serie verbunden sind;
- einen Parallelschaltzustand (vgl. Figur 7) aufweisen, in welchem alle ersten Zellmodule 14.1 miteinander in Serie verbunden sind, alle zweiten Zellmodule 14.2 miteinander in Serie verbunden sind und alle (z. B. in Serie verbundenen) ersten Zellmodule 14.1 und alle (z. B. in Serie verbundenen) zweiten Zellmodule 14.2 zueinander parallel verbunden sind;
- einen Teillastschaltzustand (nicht dargestellt), in welchem ausschließlich ein Teil der ersten Zellmodule 14.1 miteinander in Serie verbunden ist (z. B. in einer auf Zellmodule des ersten Energiespeichers 12.1 beschränkten Reihenschaltung) oder ausschließlich ein Teil der zweiten Zellmodule 14.2 miteinander in Serie verbunden ist (z. B. in einer auf Zellmodule des zweiten Energiespeichers 12.2 beschränkten Reihenschaltung);
- einen Balancingschaltzustand (vgl. Figur 9), in welchem zumindest zwei der ersten Zellmodule 14.1 innerhalb des ersten Energiespeichers 12.1 in einem geschlossenen Stromkreis verbunden sind und/oder zumindest zwei der zweiten Zellmodule 14.2 innerhalb des zweiten Energiespeichers 12.2 in einem geschlossenen Stromkreis verbunden sind;
- einen Innenwiderstandsreduktionsschaltzustand (vgl. Figur 10), in welchem: die ersten und/oder zweiten Zellmodule 14.1, 14.2 zumindest teilweise in einer kombinierten Reihen-Parallel-Schaltung miteinander elektrisch verbunden.

Auf Basis der mehreren Schaltzustände kann die Verarbeitungseinrichtung 19 ferner konfiguriert sein, bspw. in Abhängigkeit mindestens einer (z. B. empfangenen) Zustandsgröße der Energiespeichervorrichtung 10 und in Abhängigkeit mindestens eines (z. B. empfangenen) Zielkriteriums, einen Soll-Schaltzustand aus den mehreren Schaltzuständen auszuwählen und das Verbindungssystem 18 in den ausgewählten Soll-Schaltzustand zu versetzen. Lediglich beispielhaft kann die mindestens eine Zustandsgröße und/oder das mindestens eine Zielkriterium vom Kraftfahrzeug und/oder eine Ladesäule an die Verarbeitungseinrichtung 19 gesendet werden.

Bevorzugt ist die Verarbeitungseinrichtung 19 dabei konfiguriert, als Soll-Schaltzustand denjenigen aus den mehreren Schaltzuständen auszuwählen, welcher das mindestens eine Zielkriterium bestmöglich erfüllt. Das Auswählen kann hierbei bspw. auf Basis eines vorbestimmten Kornfeldes und/oder auf Basis einer vorbestimmten Zuordnung erfolgen. Bevorzugt ist die Verarbeitungseinrichtung 19 jedoch konfiguriert, auf Grundlage einer mittels eines (z. B. dynamischen und/oder physikalischen) Modells der Energiespeichervorrichtung formulierten eine Zielfunktion mit Nebenbedingungen verschiedene Lösungsalternativen zu bewerten, um so hinsichtlich des mindestens eines Zielkriteriums einen möglichst optimalen Schaltzustand aus den mehreren Schaltzuständen als Soll-Schaltzustand zu bestimmen bzw. auszuwählen. Der zur Optimierung verwendete Algorithmus bzw. die zur Optimierung verwendete Methode kann bspw. aus den folgenden Verfahren ausgewählt sein: dynamische Programmierung, Heuristik, gradientenbasiertes Newtonverfahren und/oder genetische Optimierung.

Die mindestens eine Zustandsgröße kann einen oder mehrere (z. B. aktuelle) Betriebsparameter der ersten und zweiten Zellmodule 14.1, 14.2 (und ggf. Betriebsparameter des mindestens einen weiteren Zellmoduls) aufweisen. Beispielsweise können die Betriebsparameter die jeweiligen Ladezustände (SoC), jeweilige Temperaturen, jeweilige Spannungen, jeweilige Stromstärken und/oder jeweilige Alterungszustände (SoH) der ersten und zweiten Zellmodule 14.1, 14.2 umfassen. Weiterhin kann die mindestens eine Zustandsgröße eine Größe aufweisen, die einen fehlerhaften Betriebszustand in zumindest einem der ersten und/oder zweiten Zellmodule 14.1, 14.2 anzeigt. Die mindestens eine Zustandsgröße kann der Verarbeitungseinrichtung 19 von entsprechenden Sensoren bereitgestellt werden, welche bspw. jeweils einem der ersten und zweiten Zellmodule 14.1, 14.2 bzw. deren ersten und zweiten Speicherzellen 16.1, 16.2 zugeordnet sind. Entsprechend kann die Verarbeitungseinrichtung 19 ein Kommunikationsmodul zum Empfangen der mindestens eine Zustandsgröße aufweisen, z. B. über eine drahtlose oder kabelgebundene Signalverbindung zu den entsprechenden Sensoren.

Das mindestens eine Zielkriterium kann bspw. ein (z. B. maximales oder vorgegebenes) Spannungsniveau, einen (z. B. minimalen) Innenwiderstand, einen (z. B. möglichst gleichmäßigen) Alterungszustand der ersten und zweiten Zellmodule 14.1, 14.2 und/oder einen (z. B. maximalen) Gesamtwirkungsgrad. Das mindestens eine Zielkriterium kann von der Verarbeitungseinrichtung 19 ebenfalls über dessen Kommunikationsmodul (z. B. von dem Kraftfahrzeug und/oder einer Ladesäule) empfangen werden.

Lediglich beispielhaft kann die Verarbeitungseinrichtung 19 konfiguriert sein, auf Basis einer durch das Kraftfahrzeug (als Zielkriterium) angeforderten Leistung, welche z. B. aktuell für einen Vortrieb des Kraftfahrzeugs benötigt wird, als Soll-Schaltzustand denjenigen aus den mehreren Schaltzuständen auszuwählen, mittels welchen die angeforderte Leistung bestmöglich erfüllt, zugleich allerdings ein möglichst hohes Spannungsniveau aufweist, um dadurch den Strom bzw. Wärmeverluste weitestgehend zu reduzieren. Zudem oder alternativ kann die Verarbeitungseinrichtung 19 auch konfiguriert sein, bspw. für ein möglichst verlustarmes Laden, als Soll-Schaltzustand denjenigen aus den mehreren Schaltzuständen auszuwählen, welcher das größte Spannungsniveau aller Schaltzustände (Zielkriterium) aufweist, bevorzugt um dadurch wiederum die den Strom bzw. Wärmeverluste zu reduzieren. Zusätzlich können in den beiden vorstehend beschriebenen Fällen mitunter auch weitere Zielkriterien mitberücksichtigt werden. Bspw. kann ferner der Alterungszustand der Zellmodule berücksichtigt werden, sodass bspw. Schaltungen mit stark gealterten Zellmodule vermieden werden und/oder zyklisch bzw. rollierend Schaltungen mit anderen Zellmodulen ausgewählt werden, um ein gleichmäßiges Altern aller Zellmodule zu gewährleisten.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Energiespeichervorrichtung
- 11: Systemhochvoltschnittstelle
- 12.1: Erster elektrischer Energiespeicher
- 12.2: Zweiter elektrischer Energiespeicher
- 12.3: Zweiter elektrischer Energiespeicher
- 13.1a: Erster positiver äußerer Leistungsanschluss
- 13.1b: Erster negativer äußerer Leistungsanschluss
- 13.2a: Zweiter positiver äußerer Leistungsanschluss
- 13.2b: Zweiter negativer äußerer Leistungsanschluss
- 14.1: Erstes Zellmodul
- 14.2: Zweites Zellmodul
- 14.3: Zweites Zellmodul
- 15: Schaltelement
- 15a: Erstes Schaltelement
- 15b: Zweites Schaltelement
- 15c: Kopplungsschaltelement
- 16.1: Erster Speicherzelle
- 16.2: Zweite Speicherzelle
- 17.1: Erstes Energiespeichergehäuse
- 17.2: Zweites Energiespeichergehäuse
- 18: Verbindungssystem
- 18a: Erster Leitungsabschnitt
- 18b: Zweiter Leitungsabschnitt
- 18c: Kopplungsleitungsabschnitt
- 19: Verarbeitungseinrichtung

## Patentansprüche

1. Energiespeichervorrichtung (10) für ein Kraftfahrzeug, vorzugsweise Nutzfahrzeug, aufweisend:
einen ersten elektrischen Energiespeicher (12.1), aufweisend mehrere erste Zellmodule (14.1), die jeweils mehrere in Serie verschalteter erster Speicherzellen (16.1) aufweisen;
einen zweiten elektrischen Energiespeicher (12.2), aufweisend mehrere zweite Zellmodule (14.2), die jeweils mehrere in Serie verschalteter zweiter Speicherzellen (16.2) aufweisen;
ein schaltbares Verbindungssystem (18), mittels dessen die ersten und zweiten Zellmodule (14.1, 14.2) miteinander elektrisch verbindbar sind, wobei das Verbindungssystem (18) mehrere Schaltzustände aufweist; und
eine Verarbeitungseinrichtung (19), die konfiguriert ist, das Verbindungssystem (18) in einen der mehreren Schaltzustände zu versetzen;
wobei die mehreren Schaltzustände aufweisen:
- einen Teil-Teil-Schaltzustand, in dem lediglich ein Teil der ersten Zellmodule (14.1) und lediglich ein Teil der zweiten Zellmodule (14.2) miteinander elektrisch verbunden sind; und/oder
- einen Teil-Alle-Schaltzustand, in dem lediglich ein Teil der ersten Zellmodule (14.1) und alle zweiten Zellmodule (14.2) miteinander elektrisch verbunden sind.

2. Energiespeichervorrichtung (10) nach Anspruch 1, wobei:
der Teil der ersten Zellmodule (14.1) im Teil-Teil-Schaltzustand und/oder Teil-Alle-Schaltzustand lediglich eine Hälfte, vorzugsweise lediglich ein Drittel, besonders bevorzugt lediglich ein Viertel, der ersten Zellmodule (14.1) oder lediglich ein einziges der ersten Zellmodule (14.1) aufweist.

3. Energiespeichervorrichtung (10) nach Anspruch 1 oder 2, wobei das Verbindungssystem (18) aufweist:
mehrere erste Leitungsabschnitte (18a), über die jeweils zwei der ersten Zellmodule (14.1) in Serie miteinander verbunden sind, und mehrere erste Schaltelemente (15a), wobei jeweils eines der mehreren ersten Schaltelemente (15a) in jeweils einem der mehreren ersten Leitungsabschnitte (18a) angeordnet ist; und/oder
mehrere zweite Leitungsabschnitte (18b), über die jeweils zwei der zweiten Zellmodule (14.2) in Serie miteinander verbunden sind, und mehrere zweite Schaltelemente (15b), wobei jeweils eines der mehreren zweiten Schaltelemente (15b) in jeweils einem der mehreren zweiten Leitungsabschnitte (18a) angeordnet ist; und/oder
mehrere Kopplungsleitungsabschnitte (18c), über die jeweils eines der ersten Zellmodule (14.1) und jeweils eines der zweiten Zellmodule (14.2) in Serie miteinander verbunden sind, und mehrere Kopplungsschaltelemente (15c), wobei jeweils eines der mehreren Kopplungsschaltelemente (15c) in jeweils einem der mehreren Kopplungsleitungsabschnitte (18c) angeordnet ist.

4. Energiespeichervorrichtung (10) nach einem der Anspruch 3, wobei:
der erste elektrische Energiespeicher (12.1) eine erste Schaltbox aufweist, in der ein Teil der mehreren Schaltelemente aufgenommen ist; und
der zweite elektrische Energiespeicher (12.1) eine zweite Schaltbox aufweist, in der ein anderer Teil der mehreren Schaltelemente aufgenommen ist.

5. Energiespeichervorrichtung (10) nach einem der vorherigen Ansprüche, wobei die mehreren Schaltzustände ferner aufweisen:
einen Serienschaltzustand, in welchem: alle ersten Zellmodule (14.1) und alle zweiten Zellmodule (14.2) miteinander in Serie verbunden sind; und/oder
einen Parallelschaltzustand, in welchem: alle erste Zellmodule (14.1) miteinander in Serie verbunden sind, alle zweiten Zellmodule (14.2) miteinander in Serie verbunden sind und alle ersten Zellmodule (14.1) und alle zweiten Zellmodule (14.2) zueinander parallel verbunden sind; und/oder
einen Teillastschaltzustand, in welchem: ausschließlich ein Teil der ersten Zellmodule (14.1) miteinander in Serie verbunden ist oder ausschließlich ein Teil der zweiten Zellmodule (14.2) miteinander in Serie verbunden ist; und/oder
einen Balancingschaltzustand, in welchem: zumindest zwei der ersten Zellmodule (14.1) innerhalb des ersten Energiespeichers (12.1) in einem geschlossenen Stromkreis verbunden sind und/oder zumindest zwei der zweiten Zellmodule (14.2) innerhalb des zweiten Energiespeichers (12.2) in einem geschlossenen Stromkreis verbunden sind.

6. Energiespeichervorrichtung (10) nach einem der vorherigen Ansprüche, wobei:
die Verarbeitungseinrichtung (19) konfiguriert ist, in Abhängigkeit mindestens einer Zustandsgröße der Energiespeichervorrichtung (10) und/oder in Abhängigkeit mindestens eines Zielkriteriums einen Soll-Schaltzustand aus den mehreren Schaltzuständen auszuwählen und das Verbindungssystem (18) in den ausgewählten Soll-Schaltzustand zu versetzen.

7. Energiespeichervorrichtung (10) nach Anspruch 6, wobei:
das mindestens eine Zielkriterium aufweist:
- ein, vorzugsweise maximales oder vorgegebenes, Spannungsniveau; und/oder
- einen, vorzugsweise minimalen, Innenwiderstand; und/oder
- einen, vorzugsweise möglichst gleichmäßiger, Alterungszustand der ersten und zweiten Zellmodule (14.1, 14.2); und/oder
- einen, vorzugsweise maximalen, Gesamtwirkungsgrad; und
die Verarbeitungseinrichtung (19) konfiguriert ist, als Soll-Schaltzustand denjenigen aus den mehreren Schaltzuständen auszuwählen, welcher das mindestens eine Zielkriterium bestmöglich erfüllt.

8. Energiespeichervorrichtung (10) nach Anspruch 6 oder 7, wobei:
die mindestens eine Zustandsgröße eine Größe aufweist, die einen fehlerhaften Betriebszustand in zumindest einem der ersten und/oder zweiten Zellmodule (14.1, 14.2) anzeigt; und
die Verarbeitungseinrichtung (19) konfiguriert ist, als Soll-Schaltzustand einen Schaltzustand aus den mehreren Schaltzuständen auszuwählen, welcher das zumindest eine erste und/oder zweite Zellmodul (14.1, 14.2) mit fehlerhaftem Betriebszustand nicht aufweist.

9. Energiespeichervorrichtung (10) nach einem der vorherigen Ansprüche, wobei:
in dem Teil-Teil-Schaltzustand die ersten Zellmodule (14.1) des Teils der ersten Zellmodule (14.1) zumindest teilweise in einer kombinierten Reihen-Parallel-Schaltung miteinander elektrisch verbunden sind und/oder die zweiten Zellmodule (14.2) des Teils der zweiten Zellmodule (14.1) zumindest teilweise in einer kombinierten Reihen-Parallel-Schaltung miteinander elektrisch verbunden sind; und/oder
in dem Teil-Alle-Schaltzustand die ersten Zellmodule (14.1) des Teils der ersten Zellmodule (14.1) zumindest teilweise in einer kombinierten Reihen-Parallel-Schaltung miteinander elektrisch verbunden sind und/oder die zweiten Zellmodule (14.2) zumindest teilweise in einer kombinierten Reihen-Parallel-Schaltung miteinander elektrisch verbunden sind; und/oder
die mehreren Schaltzustände einen Innenwiderstandsreduktionsschaltzustand aufweisen, in welchem: die ersten Zellmodule (14.1) und/oder zweiten Zellmodule (14.2) zumindest teilweise in einer kombinierten Reihen-Parallel-Schaltung miteinander elektrisch verbunden sind.

10. Energiespeichervorrichtung (10) nach einem der vorherigen Ansprüche, wobei:
der erste elektrische Energiespeicher (12.1) einen ersten positiven äußeren Leistungsanschluss (13.1a) und der zweite elektrische Energiespeicher (12.1) einen zweiten positiven äußeren Leistungsanschluss (13.2a) aufweist, wobei der erste und zweite positive äußere Leistungsanschluss (13.1a, 13.2a) mittels des Verbindungssystems (18) parallel zueinander elektrisch verbunden sind; und/oder
der erste elektrische Energiespeicher (12.1) einen ersten negativen äußeren Leistungsanschluss (13.1b) und der zweite elektrische Energiespeicher (12.1) einen zweiten negativen äußeren Leistungsanschluss (13.2b) aufweist, wobei der erste und zweite negative äußere Leistungsanschluss (13.1b, 13.2b) mittels des Verbindungssystems (18) parallel zueinander elektrisch verbunden sind.

11. Energiespeichervorrichtung (10) nach einem der vorherigen Ansprüche, wobei:
die Energiespeichervorrichtung (10) ferner eine Systemhochvoltschnittstelle (11) zum Verbinden mit einem Bordnetzanschluss des Kraftfahrzeugs aufweist, wobei vorzugsweise in dem Teil-Teil-Schaltzustand und/oder Teil-Alle-Schaltzustand die miteinander elektrisch verbunden ersten und zweiten Zellmodule (14.1, 14.2) über das Verbindungssystem (18) auch mit der Systemhochvoltschnittstelle (11) elektrisch verbunden sind.

12. Energiespeichervorrichtung (10) nach einem der vorherigen Ansprüche, wobei:
der erste elektrische Energiespeicher (12.1) ein erstes Energiespeichergehäuse (17.1) aufweist, in dem die mehreren ersten Zellmodule (14.1) aufgenommen sind; und
der zweite elektrische Energiespeicher (12.2) ein, vorzugsweise vom ersten Energiespeichergehäuse (17.1) separates, zweites Energiespeichergehäuse (17.2) aufweist, in dem die mehrere zweiten Zellmodule (14.2) aufgenommen sind.

13. Energiespeichervorrichtung (10) nach einem der vorherigen Ansprüche, wobei:
das Verbindungssystem (18) mindestens eine, vorzugsweise lösbare, Kabelverbindung, Stromschienenverbindung und/oder Steckverbindung zwischen dem ersten und zweiten elektrischen Energiespeicher (12.1, 12.2) aufweist; und/oder
die Verarbeitungseinrichtung (19) ein erstes Verarbeitungsmodul (19.1) und ein zweites Verarbeitungsmodul (19.2) umfasst, wobei das erste Verarbeitungsmodul (19.1) dem ersten elektrischen Energiespeicher (12.1) zugeordnet ist und das zweite Verarbeitungsmodul (19.2) dem zweiten elektrischen Energiespeicher (12.2) zugeordnet ist, wobei vorzugsweise das erste und zweite Verarbeitungsmodul (19.1, 19.2) untereinander nach dem Master-Slave-Prinzip kommunizieren.

14. Energiespeichervorrichtung (10) nach einem der vorherigen Ansprüche, wobei:
der erste und zweite elektrische Energiespeicher (12.1, 12.2) als Gleichteile ausgebildet sind; und/oder
der erste elektrische Energiespeicher (12.1) zumindest ein erstes Schaltschütz und der zweite elektrische Energiespeicher (12.2) zumindest ein zweites Schaltschütz aufweist; und/oder
der erste elektrische Energiespeicher (12.1) mindestens zwölf, vorzugsweise mindestens vierzehn, besonders bevorzugt mindestens achtzehn, erste Zellmodule (14.1) aufweist; und/oder
der zweite elektrische Energiespeicher (12.2) mindestens zwölf, vorzugsweise mindestens vierzehn, besonders bevorzugt mindestens achtzehn, zweite Zellmodule (14.2) aufweist; und/oder
der erste und zweite elektrische Energiespeicher (12.1, 12.2) jeweils als Hochvolt-Energiespeicher ausgebildet sind, vorzugsweise zum Betreiben mit einer Gleichspannung zwischen 60 V und 1,5 kV, besonders bevorzugt zwischen 400 V und 850 V.

15. Kraftfahrzeug, vorzugsweise Hybrid- oder Elektrofahrzeug (30), besonders bevorzugt Hybrid-Nutzfahrzeug oder Elektro-Nutzfahrzeug, aufweisend eine Energiespeichervorrichtung (10) nach einem der vorherigen Ansprüche.
